(19) 

Europäisches Patentamt

European Patent Office

Office européen des brevets

(11) **EP 4 722 065 A1**

(12) **EUROPEAN PATENT APPLICATION**

published in accordance with Art. 153(4) EPC

(43) Date of publication:
**08.04.2026 Bulletin 2026/15**

(21) Application number: **24814446.1**

(22) Date of filing: **28.05.2024**

(51) International Patent Classification (IPC):
**B60W 30/18** (2012.01) **B62D 6/00** (2006.01)

(52) Cooperative Patent Classification (CPC):
**B60W 30/18; B60W 50/00; B62D 6/00;** Y02T 10/72

(86) International application number:
**PCT/CN2024/095853**

(87) International publication number:
**WO 2024/245249 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 CN 202310635955**

(71) Applicant: **Beijing Chehejia Automobile Technology Co., Ltd.
Beijing 101300 (CN)**

(72) Inventor: **YANG, Bin
Beijing 101300 (CN)**

(74) Representative: **advotec.
Patent- und Rechtsanwaltspartnerschaft mbB
Widenmayerstraße 4
80538 München (DE)**

(54) **VEHICLE DRIFT CONTROL METHOD AND APPARATUS, AND DEVICE AND VEHICLE**

(57) A vehicle drift control method, comprising: collecting expected vehicle state information which is input by a driver and an expected vehicle-body sideslip angle corresponding to the expected vehicle state information; determining that the expected vehicle state information is a drift state, and resolving arctangent values of the expected vehicle-body sideslip angle and the vehicle state information, so as to obtain an expected rear-axle sideslip angle of a vehicle; and controlling the expected rear-axle sideslip angle of the vehicle by means of controlling the rotation of a rear wheel. Further provided are a vehicle drift control apparatus, a device, and a vehicle having the drift control apparatus and the device.

FIG. 1

**Description**

## CROSS REFERENCE TO RELATED APPLICATIONS

The application claims priority to Chinese patent application No. 202310635955.3, filed on May 31, 2023, the entire contents of which are incorporated herein by reference.

## TECHNICAL FIELD

The present disclosure relates to the field of vehicle control technologies, in particular to a vehicle drift control method, apparatus, and device, a storage medium, a computer program product and a vehicle.

## BACKGROUND

Modern vehicles strive for safety and comfort while also seeking to deliver greater driving enjoyment. Drifting is one such driving manner that offers immense driving pleasure.

Drifting is a driving state that the vehicle's rear axle drives at a large sideslip angle. The traditional approach involves applying significant drive force to rear wheels to increase a slip ratio. However, when the slip ratio is great, a cornering stiffness of the wheels will decrease (a greater sideslip angle is required to provide the same lateral force), and the rear wheels will have a larger sideslip angle. The larger sideslip angle of the rear wheels allows the vehicle to drive in the drifting state. However, the increase of the sideslip angle may severely damage tires. For example, it may lead to severe tire wear, tire blowouts, wheel rim failure, or even vehicle damage. Moreover, the increased slip ratio may cause the tires to lose their current lateral coefficient of adhesion, resulting in vehicle skidding and loss of control. This poses a significant risk to a driver and public safety, and greatly increases the level of danger of drifting.

The greater the slip ratio at a given location, the more severe the change in the sideslip angle of the tire caused by variations in unit slip ratio. Therefore, once the slip ratio exceeds approximately 30%, even minor changes in the slip ratio may cause significant variations in the sideslip angle, making drift control more challenging for drivers. Existing control methods typically rely on torque distribution to control the slip ratio of the vehicle. However, torque distribution may change dynamic characteristics of the vehicle. This may cause the vehicle to lose stability, which increases the risk of accidents of the vehicle.

## SUMMARY

Embodiments of the present disclosure provide a vehicle drift control method, apparatus, and device, a storage medium, a computer program product and a vehicle, to reduce the risk of vehicle drifting.

In a first aspect, the embodiments of the present disclosure provide a vehicle drift control method. The method is applied to a vehicle including a rear wheel steering system and a rear axle driving system. The method includes:

obtaining expected vehicle state information input by a driver and an expected body sideslip angle corresponding to the expected vehicle state information;
determining that the expected vehicle state information is a drifting state, and obtaining an expected rear axle sideslip angle of the vehicle by calculating an inverse tangent of the expected body sideslip angle and vehicle state information; and
controlling a rear axle steering angle of the vehicle to reach the expected rear axle sideslip angle.

In some embodiments, controlling the rear axle steering angle of the vehicle to reach the expected rear axle sideslip angle includes:

obtaining a maximum operating angle and an actual angle of a current state of the rear wheel steering system;
determining a reserve steering angle capacity of the rear wheel steering system according to the maximum operating angle and the actual angle;
when the reserve steering angle capacity does not reach a first predefined value and the actual angle does not reach the expected rear axle sideslip angle, increasing a rear wheel steering angle via the rear wheel steering system, and returning to the step of obtaining the maximum operating angle and the actual angle of the current state of the rear wheel steering system; and
when the reserve steering angle capacity reaches the first predefined value but the actual angle does not reach the expected rear axle sideslip angle, controlling the rear axle driving system to apply torque to a rear axle to cause a rear wheel sideslip angle to reach a first target value, in which the first target value is a difference between the expected rear axle sideslip angle and an actual angle of the current state of a rear wheel.

In some embodiments, when the reserve steering angle capacity does not reach the first predefined value and the actual angle does not reach the expected rear axle sideslip angle, increasing the rear wheel steering angle via the rear wheel steering system includes:

obtaining maximum driving torque and actual driving torque of a driving unit of the current state of the vehicle;
determining a reserve driving capacity of the driving unit according to the maximum driving torque and the actual driving torque;
determining a maximum body sideslip angle of the current state of the vehicle according to the reserve steering angle capacity and the reserve driving capacity; and
when the maximum body sideslip angle is greater than a first threshold, stopping increasing the rear wheel steering angle via the rear wheel steering system.

In some embodiments, obtaining the expected rear axle sideslip angle of the vehicle by calculating the inverse tangent of the expected body sideslip angle and the vehicle state information, includes:

obtaining the expected rear axle sideslip angle of the vehicle by calculating the inverse tangent of the expected body sideslip angle and the vehicle state information according to an equation that:

$$\delta_{RA,Tar} + \alpha_{RA,Tar} = \tan^{-1}\left(\tan\beta - l_R \times \dot{\psi}/v_x\right)$$

where $\delta_{RA,Tar} + \alpha_{RA,Tar}$ represents the expected rear axle sideslip angle, $\beta$ represents the expected body sideslip angle, $l_R$ represents a distance from a center of mass of the vehicle to the rear axle, $\dot{\psi}$ represents a yaw rate of the vehicle, and $v_x$ represents a transverse velocity of the vehicle.

In some embodiments, operation information includes at least one of: a steering wheel rotation angle, accelerator pedal pressure information, brake pedal pressure information or drift program activation information; and

obtaining the expected vehicle state information input by the driver and the expected body sideslip angle corresponding to the expected vehicle state information, includes:
determining whether the operation information meets at least one of the following conditions 1-4, and determining an expected vehicle state expected by the driver for a vehicle as entering a drift starting stage of the drifting state when meeting at least one of the following conditions 1-4:

condition 1: when the steering wheel rotation angle is not 0, a pressure applied to an accelerator pedal per unit time is greater than a first predefined pressure;
condition 2: when the steering wheel rotation angle is not 0, a pressure applied to a brake pedal per unit time is less than a second predefined pressure;
condition 3: a steering wheel is controlled to rotate in a first direction to cause the vehicle to yaw, and then the steering wheel is controlled to rotate in a second direction, in which the first direction and the second direction are contrary directions; and
condition 4: the drift program activation information is activating a drift program; and
after the vehicle enters the drift starting stage of the drifting state, determining a first body sideslip angle according to the steering wheel rotation angle, the accelerator pedal pressure information and the brake pedal pressure information, in which the first body sideslip angle is an expected body sideslip angle corresponding to the drift starting stage.

In some embodiments, obtaining the expected vehicle state information input by the driver and the expected body sideslip angle corresponding to the expected vehicle state information, includes:

after the vehicle enters the drift starting stage of the drifting state, when the first body sideslip angle gradually increases to the first threshold and the first body sideslip angle is of a direction being a target direction, determining the expected vehicle state as a maintaining stage of the drifting state, in which the target direction is a direction contrary to a front wheel steering direction of the vehicle, a direction towards an outside of a curve, or a direction contrary to a lateral acceleration of the vehicle;
when the expected vehicle state is the maintaining stage of the drifting state, obtaining road condition information for vehicle driving and a safe driving parameter of the vehicle;

determining a second body sideslip angle, that the road condition information allows the vehicle to pass, according to the road condition information;

determining a third body sideslip angle for safe driving of the vehicle according to the safe driving parameter;

determining a fourth body sideslip angle expected by the driver according to the steering wheel rotation angle, the accelerator pedal pressure information and the brake pedal pressure information;

determining a minimum angle among the second body sideslip angle, the third body sideslip angle and the fourth body sideslip angle as the expected body sideslip angle corresponding to the drift starting stage; and

in a case that the fourth body sideslip angle starts decreasing, the steering wheel rotation angle decreases, and no accelerator pedal pressure information is acquired, when both the fourth body sideslip angle and the steering wheel rotation angle are 0, determining the expected vehicle state as an exit stage of the drifting state.

In some embodiments, before obtaining the expected rear axle sideslip angle of the vehicle using a rigid body motion model of the vehicle based on the expected body sideslip angle and the expected vehicle state information, the method further includes: in a case that the expected body sideslip angle indicates that an expected vehicle state of a vehicle is the drifting state,

obtaining a distance between the vehicle and an outer edge of a curve or an approaching speed of the vehicle approaching the outer edge of the curve; and

when the distance is greater than a first distance or the approaching speed is greater than a first speed, reducing the expected body sideslip angle.

In a second aspect, the embodiments of the present disclosure provides a vehicle drift control apparatus. The apparatus includes:

an obtaining module, configured to obtain expected vehicle state information input by a driver and an expected body sideslip angle corresponding to the expected vehicle state information;

a calculating module, configured to, determine that the expected vehicle state information is a drifting state, and obtain an expected rear axle sideslip angle of the vehicle by calculating an inverse tangent of the expected body sideslip angle and vehicle state information; and

a control module, configured to control a rear axle steering angle of the vehicle to reach the expected rear axle sideslip angle.

In a third aspect, the embodiments of the present disclosure provides a vehicle drift control device. The device includes: a processor and a memory for storing computer program instructions.

The processor implements the vehicle drift control method in any embodiment of the first aspect when executing the computer program instructions.

In a fourth aspect, the embodiments of the present disclosure provides a computer-readable storage medium for storing computer program instructions. When the computer program instructions are executed by a processor, the vehicle drift control method in any embodiment of the first aspect is implemented.

In a fifth aspect, the embodiments of the present disclosure provides a computer program product including computer programs. When the computer programs are executed by a processor, the vehicle drift control method in any embodiment of the first aspect is implemented.

In a sixth aspect, the embodiments of the present disclosure provides a vehicle. The vehicle includes the vehicle drift control apparatus in the second aspect or the vehicle drift control device in the third aspect.

The vehicle drift control method, apparatus, and device, the storage medium, the computer program product and the vehicle provided by the embodiments of the present disclosure bring the following beneficial effects.

According to the vehicle drift control method, apparatus, and device, and the vehicle provided by the embodiments of the present disclosure, the expected vehicle state information input by the driver and the expected body sideslip angle corresponding to the expected vehicle state information are obtained; it is determined that the expected vehicle state information is the drifting state, and the expected rear axle sideslip angle of the vehicle is obtained by calculating the inverse tangent of the expected body sideslip angle and the vehicle state information; the rear axle steering angle of the vehicle is controlled to reach the expected rear axle sideslip angle, so as to control the slip ratio of the vehicle. The control of the expected rear axle sideslip angle of the vehicle is implemented through the rear wheel steering control. This enables the vehicle to maintain the expected body sideslip angle based on the rigid body motion model by controlling the expected rear axle sideslip angle, thereby achieving accurate control on the body sideslip angle of the vehicle. Since the slip ratio control based on torque distribution is avoided, issues arising from torque distribution are also avoided. Therefore, the embodiments of the present disclosure reduce the risk of accidents caused by changes in the slip ratio of the vehicle due to variations in the vehicle body sideslip angle when drifting, which reduces the risk of vehicle drifting and enhances the safety of drifting.

It should be understood that the above general description and the following detailed descriptions are merely illustrative and explanatory, and do not limit the scope of the present disclosure.

## BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure and do not constitute an undue limitation of the present disclosure.

FIG. 1 is a flowchart of a vehicle drift control method illustrated according to an example embodiment of the present disclosure.
FIG. 2 is another flowchart of the vehicle drift control method illustrated according to an example embodiment of the present disclosure.
FIG. 3 is a block diagram of a vehicle drift control apparatus illustrated according to an example embodiment of the present disclosure.
FIG. 4 is a block diagram of a vehicle drift control device illustrated according to an example embodiment of the present disclosure.

## DETAILED DESCRIPTION

To provide a clearer understanding of the above objectives, features and advantages of the present disclosure, the solutions of the present disclosure will be further explained below. It should be noted that the embodiments of the present disclosure and their features may be combined with one another without conflict.

The following description provides various specific details to facilitate a thorough understanding of the present disclosure. However, the present disclosure may also be implemented in ways different from those described herein. Obviously, the embodiments described in the description are only part of the embodiments of the present disclosure, not all of them.

As described in the background section, drifting is a driving skill for a case that the vehicle is on the verge of losing control. In this case, the rear axle of the vehicle is in a sideslip state, and a displacement velocity of a rear axle center exhibiting a significant transverse velocity component, resulting in a larger sideslip angle. However, as the sideslip angle of the vehicle increases, the slip ratio of its tires also increases exponentially, which not only increases the friction between the tires and the ground, but also severely damage the tires. For example, it may lead to tire blowouts, wheel rim failure, or even vehicle damage. Moreover, the increased slip ratio may cause the tires to lose their current lateral coefficient of adhesion, resulting in vehicle skidding and loss of control. This poses a significant risk to the driver and public safety, and greatly increases the level of danger of drifting.

To address the existing technical problems, embodiments of the present disclosure provides a vehicle drift control method based on the following inventive concept: using a rear wheel steering system and a rear axle driving system to cause rear wheels to steer at an expected rear axle sideslip angle, so as to control a body sideslip angle of the vehicle to the expected body sideslip angle, thereby reducing the risk of vehicle drifting.

According to the present disclosure, expected vehicle state information input by a driver and an expected body sideslip angle corresponding to the expected vehicle state information are obtained; it is determined that the expected vehicle state information is a drifting state, and an expected rear axle sideslip angle of the vehicle is obtained by calculating an inverse tangent of the expected body sideslip angle and the vehicle state information; a rear axle steering angle of the vehicle is controlled to reach the expected rear axle sideslip angle, so as to control the slip ratio of the vehicle. The control of the expected rear axle sideslip angle of the vehicle is implemented through the rear wheel steering control. This enables the vehicle to maintain the expected body sideslip angle based on the rigid body motion model by controlling the expected rear axle sideslip angle, thereby achieving accurate control on the body sideslip angle. Since the slip ratio control based on torque distribution is avoided, issues arising from torque distribution are also avoided. Therefore, the embodiments of the present disclosure reduce the risk of accidents caused by changes in the slip ratio of the vehicle due to variations in the vehicle body sideslip angle when drifting, which reduces the risk of vehicle drifting and enhances the safety of drifting.

Therefore, the present disclosure provides a vehicle drift control method, apparatus, and device, and a vehicle. The vehicle drift control method provided by the embodiments of the present disclosure is introduced first below. The method is applied to a vehicle, which includes a rear wheel steering system and a rear axle driving system.

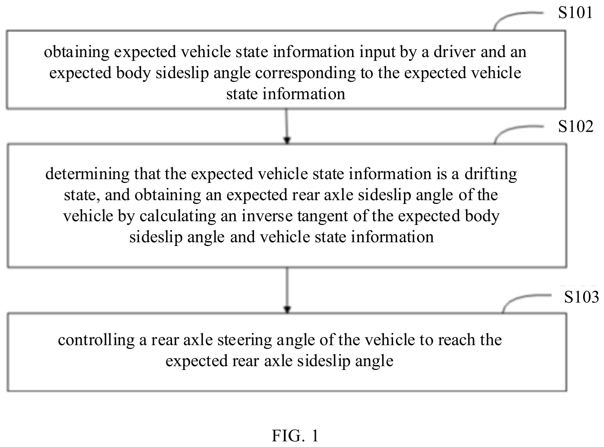

FIG. 1 is a flowchart of the vehicle drift control method illustrated according to an example embodiment of the present disclosure.

As illustrated in FIG. 1, the vehicle drift control method includes the following steps.

At step S101, expected vehicle state information input by a driver and an expected body sideslip angle corresponding to the expected vehicle state information are obtained.

At step S102, it is determined that the expected vehicle state information is a drifting state, an expected rear axle sideslip angle of the vehicle is obtained by calculating an inverse tangent of the expected body sideslip angle and vehicle state information.

At step S103, a rear axle steering angle of the vehicle is controlled to reach the expected rear axle sideslip angle.

Based on the above embodiments of the present disclosure, the expected vehicle state information input by the driver and the expected body sideslip angle corresponding to the expected vehicle state information are obtained; it is determined that the expected vehicle state information is the drifting state, and the expected rear axle sideslip angle of the vehicle is obtained by calculating the inverse tangent of the expected body sideslip angle and the vehicle state information; the rear axle steering angle of the vehicle is controlled to reach the expected rear axle sideslip angle, so as to control the slip ratio of the vehicle. The control of the expected rear axle sideslip angle of the vehicle is implemented through the rear wheel steering control. This enables the vehicle to maintain the expected body sideslip angle based on the rigid body motion model by controlling the expected rear axle sideslip angle, thereby achieving accurate control on the body sideslip angle. Since the slip ratio control based on torque distribution is avoided, issues arising from torque distribution are also avoided. Therefore, the embodiments of the present disclosure reduce the risk of accidents caused by changes in the slip ratio of the vehicle due to variations in the vehicle body sideslip angle when drifting, which reduces the risk of vehicle drifting and enhances the safety of drifting.

In the step S101, the expected vehicle state information input by the driver refers to a vehicle driving state expected by the driver when driving the vehicle, which includes a drifting state and a normal driving state.

In detail, the vehicle driving state expected by the driver may be determined through information such as operation information of the driver' operation on the vehicle, a distance from a center of mass of the vehicle to the rear axle, a yaw rate of the vehicle, and a transverse velocity of the vehicle.

The operation information of the driver may include a steering wheel rotation angle, accelerator pedal pressure, brake pedal pressure, and vehicle function activation buttons or gear levers.

The center of mass of the vehicle represents the center of its mass, which varies with different vehicle models and masses, and the distance from the center of mass to the rear axle is not fixed. However, since the rated mass of a same vehicle model is certain, the position of the center of mass can be determined. Therefore, for a given vehicle model, the distance from the center of mass to the rear axle can be determined directly during the manufacturing phase.

The driver accelerates or decelerates the vehicle via the accelerator pedal or the brake pedal. As the driver rotates the steering wheel, the steering wheel rotation angle is generated, causing the vehicle to yaw instead of moving forward. Through vector calculations, a transverse velocity vector of the vehicle, i.e., the transverse velocity of the vehicle, can be determined. The yaw rate of the vehicle represents an angular velocity of rotation around a z-axis of a coordinate system of the vehicle.

In the step S102, it is determined whether the vehicle is in the normal driving state or the drifting state based on the speed of the vehicle and the steering wheel rotation angle. After determining the speed and direction of the vehicle, an angle between a moving direction of the vehicle and a Y-axis of the coordinate system is obtained through vector calculations, which is the current body sideslip angle of the vehicle.

When the vehicle is in the drifting state, the expected rear axle sideslip angle to be reached for maintaining the expected body sideslip angle may be obtained by calculating via a rigid body motion model based on the expected body sideslip angle, the distance from the center of mass of the vehicle to the rear axle, the yaw rate of the vehicle, and the transverse velocity of the vehicle.

In detail, the rigid body motion model includes:

$$\delta_{RA,Tar} + \alpha_{RA,Tar} = \tan^{-1}\left(\tan\beta - l_R \times \dot{\psi}/v_x\right)$$

where $\delta_{RA,Tar} + \alpha_{RA,Tar}$ represents the expected rear axle sideslip angle, and the expected rear axle sideslip angle is an expected angle between a displacement direction of the rear axle and a longitudinal axis of the vehicle, $\delta_{RA,Tar}$ represents a rear wheel steering angle, $\alpha_{RA,Tar}$ represents a rear wheel sideslip angle, $\beta$ represents the expected body sideslip angle, $l_R$ represents a distance from the center of mass of the vehicle to the rear axle, $\dot{\psi}$ represents the yaw rate of the vehicle, and $v_x$ represents the transverse velocity of the vehicle.

In the above step S103, the rear axle sideslip angle of the vehicle reaches the expected rear axle sideslip angle through controlling both the rear wheel steering system and the rear axle driving system, or through controlling only the rear wheel steering system.

To improve the accuracy of controlling the rear wheel steering system and the rear axle driving system to reach the expected rear axle sideslip angle, the present disclosure provides another implementation of the vehicle drift control method.

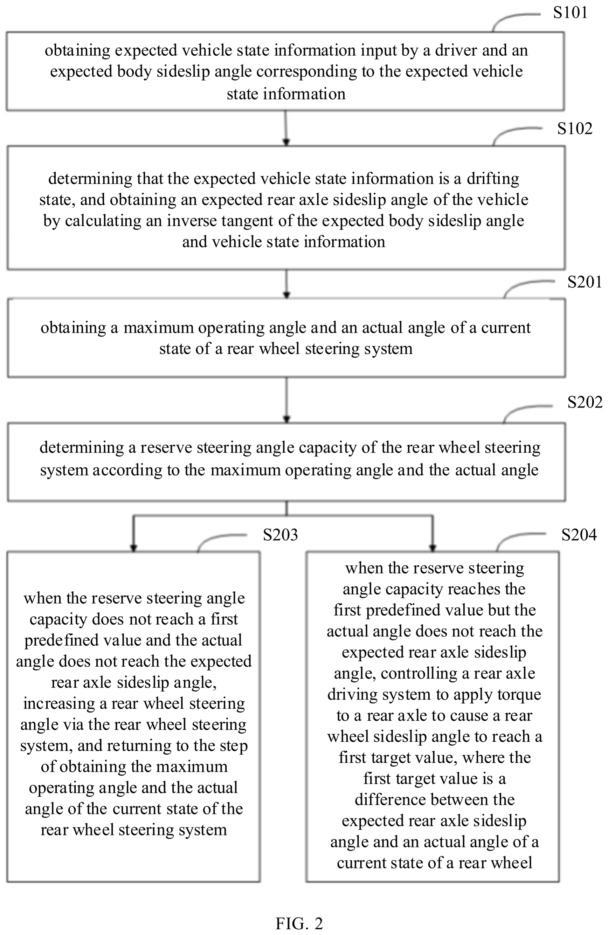

FIG. 2 is another flowchart of the vehicle drift control method illustrated according to an example embodiment of the present disclosure.

As illustrated in FIG. 2, the above step S103 includes the following steps.

At step S201, a maximum operating angle and an actual angle of a current state of a rear wheel steering system are obtained.

At step S202, a reserve steering angle capacity of the rear wheel steering system is determined according to the maximum operating angle and the actual angle.

At step S203, when the reserve steering angle capacity does not reach a first predefined value and the actual angle does not reach the expected rear axle sideslip angle, a rear wheel steering angle is increased via the rear wheel steering system, and it is returned to the step of obtaining the maximum operating angle and the actual angle of the current state of the rear wheel steering system.

At step S204, when the reserve steering angle capacity reaches the first predefined value but the actual angle does not reach the expected rear axle sideslip angle, a rear axle driving system is controlled to apply torque to a rear axle to cause a rear wheel sideslip angle to reach a first target value, in which the first target value is a difference between the expected rear axle sideslip angle and an actual angle of the current state a rear wheel.

According to the above embodiments, the reserve steering angle capacity of the rear wheel steering system is analyzed, the rear wheel steering system prioritizes utilizing the reserve capacity of the rear wheel steering angle to control the rear wheel steering angle to reach the expected rear axle sideslip angle. When the reserve steering angle capacity reaches the first predefined value and the rear axle of the vehicle has not reached the expected rear axle sideslip angle, the rear axle driving system is activated to apply torque to the rear axle, so that the rear axle of the vehicle reaches the expected rear axle sideslip angle under the combined action of both the rear wheel steering system and the rear axle driving system.

In the step S201, the maximum operating angle of the rear wheel steering system may be obtained after reading information recorded on a nameplate or a manual of the rear wheel steering system. A sensor connected to the rear wheel steering system may measure the current actual angle of the rear wheel steering system.

In the step S202, after obtaining the maximum operating angle and the actual angle of the rear wheel steering system, these values are put into the following equation to obtain the reserve steering angle capacity of the system:

reserve steering angle capacity = (maximum operating angle of the current state-current actual angle)/maximum operating angle of the current state.

In the step S203, the first predefined value represents a maximum value of the reserve steering angle capacity. If the reserve steering angle capacity does not reach the first predefined value, it indicates that the rear wheel steering system does not reach its limit and can continue to drive the rear wheels to steer. If the actual angle does not reach the expected rear axle sideslip angle, it indicates that the current rear wheel steering angle does not reach the expected rear axle sideslip angle. Therefore, the rear wheel steering system is required to drive the rear wheels to increase their steering angles, until the rear wheel steering angle reaches the expected rear axle sideslip angle or the reserve steering angle capacity reaches the first predefined value. Since the actual rear wheel angle continuously changes when the rear wheel steering system controls the rear wheels to steer, it needs to obtain the real-time actual angle of the rear wheel during this process and continuously update the reserve steering angle capacity of the rear wheel steering system.

In the step S204, if the reserve steering angle capacity of the rear wheel steering system reaches its maximum value but the actual rear wheel angle does not reach the expected rear axle sideslip angle, the rear axle driving system is controlled to apply torque to the rear axle to generate the rear wheel sideslip angle at the rear wheels of the vehicle. In detail, the magnitude of torque applied to the rear axle is controlled by controlling the driving torque of the rear wheels.

By controlling the rear wheel steering angle and the rear wheel sideslip angle with the combined action of the rear wheel steering system and the rear axle driving system, the rear axle sideslip angle of the vehicle can reach the expected rear axle sideslip angle.

To enhance the safety of vehicle drifting, the present disclosure also provides another implementation of the vehicle drift control method.

In an embodiment, in the step S203, the method further includes the following steps.

At step S301, maximum driving torque and actual driving torque of a driving unit under the current state of the vehicle are obtained.

At step S302, a reserve driving capacity of the driving unit is determined according to the maximum driving torque and the actual driving torque.

At step S303, a maximum body sideslip angle of the current state of the vehicle is determined according to the reserve steering angle capacity and the reserve driving capacity.

At step S304, when the maximum body sideslip angle is greater than a first threshold, the rear wheel steering system stops increasing the rear wheel steering angle.

According to the above embodiments, by analyzing the maximum torque and the actual torque of the driving unit of the vehicle, the maximum body sideslip angle the vehicle can reach under the current condition is determined. If the maximum body sideslip angle is greater than a body sideslip angle the vehicle is allowed to reach, the vehicle itself cannot support reaching the maximum body sideslip angle. Therefore, it needs to control the rear wheel steering system to stop increasing the rear wheel steering angle, so as to ensure vehicle safety.

In the step S301, the driving unit of the vehicle may be an electric motor, an internal combustion engine, etc. The maximum driving torque of the driving unit under the current state of the vehicle may be obtained by reading information recorded on a nameplate or a manual of the driving unit. The actual driving torque output by the driving unit is obtained through sensor detection or calculation.

In the step S302, after obtaining the maximum driving torque and the actual driving torque of the driving unit, the reserve driving capacity of the driving unit is obtained by inputting these values into the following equation:

reserve driving capacity = (maximum driving torque-actual driving torque)/actual driving torque.

In the step S303, the maximum body sideslip angle of the current state of the vehicle is determined based on the reserve steering angle capacity and the reserve driving capacity. That is, it is determined the maximum expected rear axle sideslip angle that is achievable by the rear wheel under the current state through the combined action of the rear wheel steering system and the rear axle driving system. Based on the above equation of the rigid body motion model, the theoretical maximum body sideslip angle that the rear wheel steering system and the rear axle driving system can support can be obtained through reverse calculation.

In the step S304, if the theoretical maximum body sideslip angle is greater than the actual body sideslip angle the vehicle is allowed to reach, it needs to control the real-time body sideslip angle of the current state of the vehicle. In detail, it stops increasing the rear wheel steering angle to ensure that the real-time body sideslip angle of the current state of the vehicle is no greater than the actual body sideslip angle the vehicle is allowed to reach.

To enhance the accuracy of determining the target vehicle state for the driver, the present disclosure further provides another implementation of the vehicle drift control method.

In an embodiment, the step S101 includes the following steps.

At step S401, it is determined whether the operation information meets at least one of the following conditions, and an expected vehicle state expected by the driver for a vehicle is determined as entering a drift starting stage of the drifting state when meeting the at least one of the following conditions.

Condition 1: when the steering wheel rotation angle is not 0, and a pressure applied to an accelerator pedal per unit time is greater than a first predefined pressure.

Condition 2: when the steering wheel rotation angle is not 0, and a pressure applied to a brake pedal per unit time is less than a second predefined pressure.

Condition 3: a steering wheel is controlled to rotate in a first direction to cause the vehicle to yaw, and then the steering wheel is controlled to rotate in a second direction, in which the first direction and the second direction are contrary directions.

Condition 4: the drift program activation information is activating a drift program.

At step S402, after the vehicle enters the drift starting stage of the drifting state, a first body sideslip angle is determined according to the steering wheel rotation angle, the accelerator pedal pressure information and the brake pedal pressure information, in which the first body sideslip angle is an expected body sideslip angle corresponding to the drift starting stage.

At step S403, after the vehicle enters the drift starting stage of the drifting state, when the first body sideslip angle gradually increases to the first threshold and the first body sideslip angle is of a direction being a target direction, the expected vehicle state is determined as a maintaining stage of the drifting state, in which the target direction is a direction contrary to a front wheel steering direction of the vehicle, a direction towards an outside of a curve, or a direction contrary to a lateral acceleration of the vehicle.

At step S404, when the expected vehicle state is the maintaining stage of the drifting state, road condition information and a safe driving parameter of the vehicle are obtained.

At step S405, a second body sideslip angle that the road condition information allows the vehicle to pass is determined according to the road condition information.

At step S406, a third body sideslip angle for safe driving is determined according to the safe driving parameter.

At step S407, a fourth body sideslip angle expected by the driver is determined according to the steering wheel rotation angle, the accelerator pedal pressure information and the brake pedal pressure information.

At step S408, a minimum angle among the second body sideslip angle, the third body sideslip angle and the fourth body sideslip angle is determined as the expected body sideslip angle corresponding to the drift starting stage.

At step S409, in a case that the fourth body sideslip angle starts decreasing, the steering wheel rotation angle decreases, and no accelerator pedal pressure information is acquired, when both the fourth body sideslip angle and the steering wheel rotation angle are 0, the expected vehicle state is determined as an exiting stage of the drifting state.

According to the above embodiments, by analyzing the operation information of the driver, the vehicle state expected by the driver and the expected body sideslip angle corresponding to the expected vehicle state information are determined. The different expected body sideslip angles are determined for the respective expected vehicle states, which is beneficial for accurate control of the rear wheel steering angle of the vehicle under different conditions, and enhances the driving safety.

In the step S401, for condition 1, when the vehicle is traveling normally, if the steering wheel rotation angle is not zero, the driving direction of the vehicle is not the forward direction of the vehicle. Then, the driver applies a force greater than that required for the vehicle to travel normally to the accelerator pedal, to make the vehicle to rapidly increase its speed within a short time.

For condition 2, when the vehicle is traveling normally, if the steering wheel rotation angle is not zero, the driving direction of the vehicle is not the forward direction of the vehicle. Then, the driver lightly steps on the brake pedal and uses inertia to change the center of mass of the vehicle.

For condition 3, the driver first rotates the steering wheel in the first direction and waits for the vehicle to yaw, and then rotates the steering wheel in the second direction to complete a Scandinavian drift. The first direction and the second direction are contrary directions.

For condition 4, the driver activates the drift program of the vehicle via a button, a gear lever, or other structures.

If any one of the conditions 1-4 is met when the driver drives the vehicle, the expected vehicle state expected by the driver for the vehicle is entering the drift starting stage of the drifting state. That is, if a rotation torque generated by lateral force of the rear wheels at the center of mass is less than that generated by lateral force of the front wheels at the center of mass, the rear of the vehicle will slide outward, and the vehicle state expected by the driver for the vehicle is the drift starting stage of the drifting state.

In the step S402, the speed of the vehicle is determined based on the accelerator pedal pressure information or the brake pedal pressure information. Based on the speed of the vehicle and the steering wheel rotation angle, the first body sideslip angle generated at the current speed is obtained through vector calculation. For the drift starting stage, the speed of the vehicle is constantly changed, and thus the first body sideslip angle is also changed constantly.

In the above step S403, after the vehicle enters the drift starting stage of the drifting state, as the first body sideslip angle continues to increase, if the first body sideslip angle exceeds the maximum body sideslip angle of the vehicle without sideslip, and its direction is contrary to a front wheel steering direction of the vehicle, a direction towards an outside of a curve, or a direction contrary to a lateral acceleration of the vehicle, it is considered that the vehicle has started slipping and entered the drifting state, and it is determined that the vehicle enters the maintaining stage of the drifting state.

In the step S404, a camera mounted on the vehicle may capture real-time road surface information, such as potholes and obstacles on the road, while traveling. The road segment information at the current position may be obtained through real-time positioning using the in-vehicle map, such as road gradient, road surface friction coefficient and road inclination angle. The safe driving parameter refers to a parameter for safe driving of the vehicle, such as rated rear wheel rotation angle and rated torque of the driving unit.

In the step S405, if it is determined that the vehicle does not cross the road edge under the given environmental conditions, based on information such as road surface gradient, road surface friction coefficient, road surface inclination angle, road surface condition and road edge position, the second body sideslip angle, which is the maximum body sideslip angle the vehicle can reach on the current road segment while ensuring safe driving, is determined.

In the step S406, the third body sideslip angle, which is the maximum body sideslip angle the vehicle can reach while ensuring its safety, is calculated based on the maximum safe driving speed and the rated rear wheel steering angle.

In the step S407, the speed direction and the direction of the vehicle are determined according to the steering wheel rotation angle and the accelerator pedal pressure information, then the fourth body sideslip angle expected by the driver is calculated.

In the step S408, by comparing the second body sideslip angle, the third body sideslip angle and the fourth body sideslip angle, the minimum angle of them is the expected body sideslip angle corresponding to the maintaining stage of the drifting state while ensuring safety.

In the step S409, in a case that the fourth body sideslip angle starts decreasing, the steering wheel rotation angle decreases, and no accelerator pedal pressure information is acquired, it indicates that the driver gradually stops the drifting state and controls the vehicle to the normal driving state. Only when both the fourth body sideslip angle and the steering wheel rotation angle are zero, it is determined that the expected vehicle state is an exit stage of the drifting state. In the exit stage of the drifting state, the steering wheel rotation angle is 0, and the speed direction is consistent with the direction of the vehicle, and thus there is no body sideslip angle corresponding to the exit stage of the drifting state.

As an example, during the drift starting stage of the drifting state, if the first body sideslip angle starts decreasing and the steering wheel rotation angle also decreases, and no accelerator pedal pressure information is obtained, when both the first body sideslip angle and the steering wheel rotation angle are zero, the vehicle directly enters the exit stage from the drift starting stage, and is reverted to the normal driving state.

To enhance the driving safety, the present disclosure further provides another implementation of the vehicle drift control method.

In an embodiment, before the step S102, the vehicle drift control method further includes:

in a case that the expected body sideslip angle indicates that the expected vehicle state of the vehicle is the drifting state:
S501: obtaining a distance between the vehicle and an outer edge of a curve or an approaching speed of the vehicle approaching the outer edge of the curve; and
S502: when the distance is greater than a first distance or the approaching speed is greater than a first speed, reducing the expected body sideslip angle.

Based on the above embodiments, the required safety threshold for the vehicle is determined by utilizing either the distance between the vehicle and the outer edge of the curve or the approaching speed of the vehicle approaching the outer edge of the curve. It is necessary to reduce the expected body sideslip angle, to ensure that the vehicle can safe passing the curve, thereby enhancing the safety of drifting.

In step S501, a vehicle-mounted camera obtains the distance between the vehicle and the curve edge when the vehicle is travelling in the curve. A sensor in the vehicle detects the pressure applied to the accelerator pedal or the brake pedal by the driver to obtain the vehicle speed, or the vehicle speed may be calculated based on the rotation speed of the wheel.

In step S502, in an example, if the vehicle approaches the outer edge of the curve, there is a chance that the vehicle drives off the curve and loses control if the body sideslip angle changes. Therefore, the expected body sideslip angle needs to be reduced to lower the probability of occurrence of the hazardous situation.

In another example, to ensure safe passing through the curve, an inner radius of the curve is generally designed to be lower than an outer radius, if the vehicle is cornering at an excessive speed, the centripetal force acting on the vehicle increases, and the coefficient of adhesion between the vehicle and the ground decreases. Therefore, it needs to reduce the body sideslip angle and increase the coefficient of adhesion between the vehicle and the ground, to ensure safe passing through the curve while drifting.

It should be noted that the application scenarios in the above embodiments of the present disclosure are introduced to facilitate a better understanding of the technical solutions of the embodiments of the present disclosure and do not constitute limitations on the technical solutions provided by the embodiments of the present disclosure. Those skilled in the art understand that as new application scenarios emerge, the technical solutions provided by the embodiments of the present disclosure are applicable to similar technical problems.

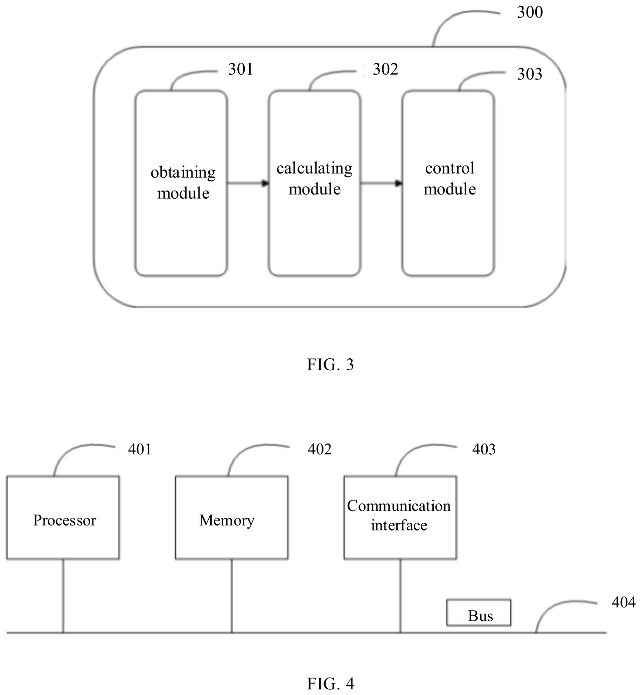

Based on the same inventive concept, the present disclosure provides a vehicle drift control apparatus. Detailed description is provided below with reference to FIG. 3.

FIG. 3 is a block diagram of a vehicle drift control apparatus 300 illustrated according to an example embodiment of the present disclosure.

As illustrated in FIG. 3, the vehicle drift control apparatus 300 includes:

an obtaining module 310, configured to obtain expected vehicle state information input by a driver and an expected body sideslip angle corresponding to the expected vehicle state information;
a calculating module 320, configured to determine that the expected vehicle state information is a drifting state, and obtain an expected rear axle sideslip angle of the vehicle by calculating an inverse tangent of the expected body sideslip angle and vehicle state information; and
a control module 330, configured to control a rear axle steering angle to reach the expected rear axle sideslip angle.

According to the vehicle drift control apparatus 300 provided by the above embodiments of the present disclosure, the obtaining module 310 obtains the expected vehicle state information input by the driver and the expected body sideslip angle corresponding to the expected vehicle state information. The calculating module 320 determines that the expected vehicle state information is the drifting state, and obtains the expected rear axle sideslip angle of the vehicle by calculating the inverse tangent of the expected body sideslip angle and the vehicle state information. The control module 330 controls the rear axle steering angle to reach the expected rear axle sideslip angle, so as to control the slip ratio of the vehicle. The control of the expected rear axle sideslip angle of the vehicle is implemented through the rear wheel steering control. This enables the vehicle to maintain the expected body sideslip angle based on the rigid body motion model by controlling the expected rear axle sideslip angle, thereby achieving accurate control on the body sideslip angle. Since the slip ratio control based on torque distribution is avoided, issues arising from torque distribution are also avoided. Therefore, the embodiments of the present disclosure reduce the risk of accidents caused by changes in the slip ratio of the vehicle due to variations in the vehicle body sideslip angle when drifting, which reduces the risk of vehicle drifting and enhances the safety of drifting.

In some embodiments, the control module 330 includes:

a first obtaining unit, configured to obtain a maximum operating angle and an actual angle of a rear wheel steering system of the current state;

a first determining unit, configured to determine a reserve steering angle capacity of the rear wheel steering system according to the maximum operating angle and the actual angle; and

a first executing unit, configured to, when the reserve steering angle capacity does not reach a first predefined value and the actual angle does not reach the expected rear axle sideslip angle, increase a rear wheel steering angle via the rear wheel steering system, and return to the step of obtaining the maximum operating angle and the actual angle of the current state of the rear wheel steering system; or

a second executing unit, configured to, when the reserve steering angle capacity reaches the first predefined value but the actual angle does not reach the expected rear axle sideslip angle, control a rear axle driving system to apply torque to a rear axle to cause a rear wheel sideslip angle to reach a first target value, in which the first target value is a difference between the expected rear axle sideslip angle and an actual angle of a current state of a rear wheel.

In some embodiments, the first executing unit includes:

a first obtaining sub-unit, configured to obtain maximum driving torque and actual driving torque of a driving unit of the vehicle of the current state;

a first determining sub-unit, configured to determine a reserve driving capacity of the driving unit according to the maximum driving torque and the actual driving torque;

a first judgment sub-unit, configured to determine a maximum body sideslip angle of the current state of the vehicle according to the reserve steering angle capacity and the reserve driving capacity; and

a first executing sub-unit, configured to, if the maximum body sideslip angle is greater than a first threshold, stop increasing the rear wheel steering angle via the rear wheel steering system.

In some embodiments, the obtaining module 310 includes:

a second determining unit, configured to determine whether the operation information meets at least one of the following conditions 1-4, and determine an expected vehicle state expected by the driver for a vehicle as entering a drift starting stage of the drifting state when meeting at least one of the conditions 1-4:

condition 1: when the steering wheel rotation angle is not 0, a pressure applied to an accelerator pedal per unit time is greater than a first predefined pressure;

condition 2: when the steering wheel rotation angle is not 0, a pressure applied to a brake pedal per unit time is less than a second predefined pressure;

condition 3: a steering wheel is controlled to rotate in a first direction to cause the vehicle to yaw, and then the steering wheel is controlled to rotate in a second direction, in which the first direction and the second direction are contrary directions; and

condition 4: the drift program activation information is activating a drift program;

a third determining unit, configured to, after the vehicle enters the drift starting stage of the drifting state, determine a first body sideslip angle according to the steering wheel rotation angle, the accelerator pedal pressure information and the brake pedal pressure information, in which the first body sideslip angle is an expected body sideslip angle when entering the drafting state;

a fourth determining unit, configured to, after the vehicle enters the drift starting stage of the drifting state, when the first body sideslip angle gradually increases to the first threshold and the first body sideslip angle is of a direction being a target direction, determine the expected vehicle state as a maintaining stage of the drifting state, in which the target direction is a direction contrary to a front wheel steering direction of the vehicle, a direction towards an outside of a curve, or a direction contrary to a lateral acceleration of the vehicle;

a second obtaining unit, configured to, when the expected vehicle state is the maintaining stage of the drifting state, obtain road condition information for vehicle driving and a safe driving parameter of the vehicle;

a fifth determining unit, configured to determine a second body sideslip angle, that the road condition information allows the vehicle to pass, according to the road condition information;

a sixth determining unit, configured to determine a third body sideslip angle for safe driving according to the safe driving parameters;

a seventh determining unit, configured to determine a fourth body sideslip angle expected by the driver according to the steering wheel rotation angle, the accelerator pedal pressure information and the brake pedal pressure information;

an eighth determining unit, configured to determine a minimum angle among the second body sideslip angle, the third body sideslip angle and the fourth body sideslip angle as the expected body sideslip angle corresponding to the drift starting stage; and

a ninth determining unit, configured to, in a case that the fourth body sideslip angle starts decreasing, the steering wheel rotation angle decreases, and no accelerator pedal pressure information is acquired, determine the expected vehicle state as an exit stage of the drifting state when both the fourth body sideslip angle and the steering wheel rotation angle are 0.

The vehicle drift control apparatus 300 provided in the embodiments of the present disclosure can perform all the processes implemented by the method embodiments shown in FIGS. 1 and 2 and achieve the same technical effects. To avoid repetition, the details are not described here again.

FIG. 4 is a block diagram of a vehicle drift control device illustrated according to an example embodiment of the present disclosure.

The vehicle drift control device includes: a processor 401 and a memory 402 for storing computer program instructions.

In detail, the processor 401 may include a central processing unit (CPU) or an application specific integrated circuit (ASIC), or may be configured to implement one or more integrated circuits of the embodiments of the present disclosure.

The memory 402 may include a large-capacity memory for storing data or instructions. For example, the memory 402 includes, but is not limited to, a hard disk drive (HDD), a floppy disk drive, a flash memory, an optical disk, a magneto-optical disk, a magnetic tape, a universal serial bus (USB) drive, or a combination of two or more of these. Under appropriate circumstances, the memory 402 may include removable or non-removable (or fixed) mediums, and the memory 402 may be configured on the inside or outside of an integrated gateway disaster recovery device. In certain embodiments, the memory 402 is a non-volatile solid memory.

In some embodiments, the memory 402 may include a read-only memory (ROM), a random access memory (RAM), a disk storage medium, an optical storage medium, a flash memory, an electrical/optical memory, or other physical/tangible memories. Generally, the memory 402 includes one or more tangible (non-transitory) computer-readable storage mediums (e.g., memories) encoded with software including computer-executable instructions. When the software is executed (e.g., by one or more processors 401), the method according to the first aspect of the present disclosure is implemented.

The processor 401 reads and executes the computer program instructions stored in the memory 402 to implement any of the vehicle drift control methods described in the above embodiments.

In an example, the vehicle drift control device may also include a communication interface 403 and a bus 404. As illustrated in FIG. 4, the processor 401, the memory 402 and the communication interface 403 are connected via the bus 404 for communication.

The communication interface 403 is mainly used to facilitate communication between various modules, devices, units and/or apparatuses in the embodiments of the present disclosure.

The bus 404 includes hardware, software or both. For example, the bus 34 includes, but is not limited to, an accelerated graphics port (AGP) or other graphics buses, an enhanced industrial standard architecture (EISA) bus, a front side bus (FSB), a hyper-transport (HT) interconnect, an industrial standard architecture (ISA) bus, a wireless bandwidth interconnect, a low pin count (LPC) bus, a memory bus, a micro-channel architecture (MCA) bus, a peripheral component interconnect (PCI) bus, a PCI-Express (PCI-X) bus, a serial advanced technology attachment (SATA) bus, a video electronics standards association local bus (VLB) or other suitable buses, or a combination of two or more of these. Under appropriate circumstances, the bus 404 may include one or more buses 404. Although a specific bus 404 is described and illustrated in the embodiments of the present disclosure, any suitable bus 404 or interconnection is considered by the present disclosure.

The vehicle drift control device is based on the vehicle drift control methods, and can implement the vehicle drift control methods and the apparatuses described in combination with FIGS. 1-6.

In addition, the present disclosure provides a computer program product including computer program instructions. When the computer program instructions are executed by the processor 401, the steps and related contents of the embodiments of the vehicle drift control method are implemented.

It should be noted that the present disclosure is not limited to the specific configurations and processes described above and shown in the drawings. For the sake of brevity, detailed descriptions of known arts are omitted here. In the above embodiments, some specific steps are described and illustrated as examples. However, the method of the present disclosure is not limited to the specific steps described and shown herein. Those skilled in the art can make various changes, modifications and additions, or change the execution order of the steps following the spirit of the present disclosure.

The functional blocks shown in the above structural block diagrams may be implemented as a hardware, software, a firmware or a combination thereof. When implemented in hardware, it may be, for example, an electronic circuit, an ASIC, or an appropriate firmware/plug-in/function card. When implemented in software, the elements of the present disclosure are programs or code segments used to perform required tasks. The programs or code segments are

EP 4 722 065 A1

stored in a machine-readable medium or transmitted over a transmission medium or communication link via a data signal carried by a carrier. The "machine-readable medium" may include any medium for storing or transmitting information. Examples of the machine-readable medium include electronic circuits, semiconductor memories, ROMs, flash memories, erasable ROMs (EROMs), floppy disks, CD-ROMs, optical disks, hard disks, fiber optic mediums, radio frequency (RF) links, and the like. The code segments may be downloaded via a computer network such as the Internet, an intranet, or the like.

It should also be noted that the example embodiments mentioned in the present disclosure describe some methods or systems based on a series of steps or devices. However, the execution order of the above steps is not limited by the present disclosure. That is, the steps may be executed in the order mentioned in the embodiments or in another order different from the order in the embodiments, or the steps may be executed simultaneously.

Aspects of the present disclosure are described above with reference to the flowcharts and/or block diagrams of the method, the apparatus (system) and the computer program product according to the embodiments of the present disclosure. It is understood that each block of the flowcharts and/or block diagrams or combinations of blocks in the flowcharts and/or block diagrams can be implemented by computer program instructions. These computer program instructions may be provided to a processor of a general-purpose computer, a dedicated computer or a programmable vehicle drift control device to produce a machine, so that when these instructions are executed by the processor of the computer or the programmable vehicle drift control device, the functions/actions specified in one or more blocks of the flowcharts and/or block diagrams can be implemented. The processor includes, but is not limited to, a general-purpose processor, a dedicated processor, a special application processor, or a field programmable logic circuit. It is understood that each block in the block diagrams and/or flowcharts or combinations of blocks in the block diagrams and/or flowcharts can be implemented by a dedicated hardware that is capable of implementing specific functions or actions or by a combination of the dedicated hardware and computer instructions.

Based on the same inventive concept, the present disclosure provides a vehicle. The vehicle includes the vehicle drift control apparatus 300 or the vehicle drift control device described above in the present disclosure.

Only specific implementations of the present disclosure are described above. Those skilled in the art clearly understand that for the convenience and brevity of description, the specific working processes of the system, module and unit described above can refer to the corresponding processes in the above method embodiments, which will not be repeated here. It should be understood that the protection scope of the present disclosure is not limited thereto, and any technician familiar with the technical field can easily think of various equivalent modifications or substitutions within the technical scope disclosed in the present disclosure. These modifications or substitutions are included in the protection scope of the present disclosure.

All embodiments of the present disclosure can be implemented separately or together with any other embodiment, which are deemed to be within the protection scope of the present disclosure.

## Claims

1.  A vehicle drift control method, comprising:

    obtaining expected vehicle state information input by a driver and an expected body sideslip angle corresponding to the expected vehicle state information;
    determining that the expected vehicle state information is a drifting state, and obtaining an expected rear axle sideslip angle of the vehicle by calculating an inverse tangent of the expected body sideslip angle and vehicle state information; and
    controlling a rear axle steering angle of the vehicle to reach the expected rear axle sideslip angle.

2.  The method of claim 1, wherein controlling the rear axle steering angle of the vehicle to reach the expected rear axle sideslip angle comprises:

    obtaining a maximum operating angle and an actual angle of a current state of a rear wheel steering system;
    determining a reserve steering angle capacity of the rear wheel steering system according to the maximum operating angle and the actual angle;
    when the reserve steering angle capacity does not reach a first predefined value and the actual angle does not reach the expected rear axle sideslip angle, increasing a rear wheel steering angle via the rear wheel steering system, and returning to the step of obtaining the maximum operating angle and the actual angle of the current state of the rear wheel steering system; and
    when the reserve steering angle capacity reaches the first predefined value but the actual angle does not reach the expected rear axle sideslip angle, controlling a rear axle driving system to apply torque to a rear axle to cause a

13

rear wheel sideslip angle to reach a first target value, wherein the first target value is a difference between the expected rear axle sideslip angle and an actual angle of a current state of a rear wheel.

3. The method of claim 2, wherein when the reserve steering angle capacity does not reach the first predefined value and the actual angle does not reach the expected rear axle sideslip angle, increasing the rear wheel steering angle via the rear wheel steering system, comprises:

obtaining maximum driving torque and actual driving torque of a driving unit of the current state of the vehicle; determining a reserve driving capacity of the driving unit according to the maximum driving torque and the actual driving torque; determining a maximum body sideslip angle of the current state of the vehicle according to the reserve steering angle capacity and the reserve driving capacity; and when the maximum body sideslip angle is greater than a first threshold, stopping increasing the rear wheel steering angle via the rear wheel steering system.

4. The method of any one of claims 1-3, wherein obtaining the expected rear axle sideslip angle of the vehicle by calculating the inverse tangent of the expected body sideslip angle and the vehicle state information, comprises:

obtaining the expected rear axle sideslip angle of the vehicle by calculating the inverse tangent of the expected body sideslip angle and the vehicle state information according to an equation that:

$$\delta_{RA,Tar} + \alpha_{RA,Tar} = \tan^{-1}\left(\tan\beta - l_R \times \dot{\psi}/v_x\right)$$

where $\delta_{RA,Tar} + \alpha_{RA,Tar}$ represents the expected rear axle sideslip angle, $\beta$ represents the expected body sideslip angle, $l_R$ represents a distance from a center of mass of the vehicle to the rear axle, $\dot{\psi}$ represents a yaw rate of the vehicle, and $v_x$ represents a transverse velocity of the vehicle.

5. The method of any one of claims 1-3, wherein operation information comprises at least one of: a steering wheel rotation angle, accelerator pedal pressure information, brake pedal pressure information or drift program activation information; and
obtaining the expected vehicle state information input by the driver and the expected body sideslip angle corresponding to the expected vehicle state information, comprises:
determining whether the operation information meets at least one of conditions 1-4, and determining an expected vehicle state expected by the driver for a vehicle as entering a drift starting stage of the drifting state when meeting at least one of the conditions 1-4, the conditions comprising:

condition 1: when the steering wheel rotation angle is not 0, a pressure applied to an accelerator pedal per unit time is greater than a first predefined pressure;
condition 2: when the steering wheel rotation angle is not 0, a pressure applied to a brake pedal per unit time is less than a second predefined pressure;
condition 3: a steering wheel is controlled to rotate in a first direction to cause the vehicle to yaw, and then the steering wheel is controlled to rotate in a second direction, wherein the first direction and the second direction are contrary directions; and
condition 4: the drift program activation information is activating a drift program; and
after the vehicle enters the drift starting stage of the drifting state, determining a first body sideslip angle according to the steering wheel rotation angle, the accelerator pedal pressure information and the brake pedal pressure information, wherein the first body sideslip angle is an expected body sideslip angle corresponding to the drift starting stage.

6. The method of claim 5, wherein obtaining the expected vehicle state information input by the driver and the expected body sideslip angle corresponding to the expected vehicle state information, comprises:

after the vehicle enters the drift starting stage of the drifting state, when the first body sideslip angle gradually increases to the first threshold and the first body sideslip angle is of a direction being a target direction, determining the expected vehicle state as a maintaining stage of the drifting state, wherein the target direction is a direction contrary to a front wheel steering direction of the vehicle, a direction towards an outside of a curve, or a direction contrary to a lateral acceleration of the vehicle;

when the expected vehicle state is the maintaining stage of the drifting state, obtaining road condition information for vehicle driving and a safe driving parameter of the vehicle;

determining a second body sideslip angle, that the road condition information allows the vehicle to pass, according to the road condition information;

determining a third body sideslip angle for safe driving of the vehicle according to the safe driving parameter;

determining a fourth body sideslip angle expected by the driver according to the steering wheel rotation angle, the accelerator pedal pressure information and the brake pedal pressure information;

determining a minimum angle among the second body sideslip angle, the third body sideslip angle and the fourth body sideslip angle as the expected body sideslip angle corresponding to the drift starting stage; and

in a case that the fourth body sideslip angle starts decreasing, the steering wheel rotation angle decreases, and no accelerator pedal pressure information is acquired, when both the fourth body sideslip angle and the steering wheel rotation angle are 0, determining the expected vehicle state as an exit stage of the drifting state.

7. The method of any one of claims 1-3, wherein before obtaining the expected rear axle sideslip angle of the vehicle using a rigid body motion model of the vehicle based on the expected body sideslip angle and the expected vehicle state information, the method further comprises:

in a case that the expected body sideslip angle indicates that an expected vehicle state of a vehicle is the drifting state, obtaining a distance between the vehicle and an outer edge of a curve or an approaching speed of the vehicle approaching the outer edge of the curve; and

when the distance is greater than a first distance or the approaching speed is greater than a first speed, reducing the expected body sideslip angle.

8. A vehicle drift control apparatus, comprising:

an obtaining module, configured to obtain expected vehicle state information input by a driver and an expected body sideslip angle corresponding to the expected vehicle state information;

a calculating module, configured to, determine that the expected vehicle state information is a drifting state, and obtain an expected rear axle sideslip angle of the vehicle by calculating an inverse tangent of the expected body sideslip angle and vehicle state information; and

a control module, configured to control a rear axle steering angle of the vehicle to reach the expected rear axle sideslip angle.

9. A vehicle drift control device, comprising: a processor and a memory for storing computer program instructions, wherein the processor implements the vehicle drift control method in any one of claims 1-7 when executing the computer program instructions.

10. A vehicle, comprising the vehicle drift control apparatus in claim 8 or the vehicle drift control device in claim 9.

11. A computer-readable storage medium for storing computer program instructions that, when executed by a processor, implements the vehicle drift control method of any one of claims 1-7.

12. A computer program product comprising a computer program, wherein when the computer program is executed by a processor, the vehicle drift control method of any one of claims 1-7 is implemented.

S101

obtaining expected vehicle state information input by a driver and an expected body sideslip angle corresponding to the expected vehicle state information

S102

determining that the expected vehicle state information is a drifting state, and obtaining an expected rear axle sideslip angle of the vehicle by calculating an inverse tangent of the expected body sideslip angle and vehicle state information

S103

controlling a rear axle steering angle of the vehicle to reach the expected rear axle sideslip angle

FIG. 1

S101

obtaining expected vehicle state information input by a driver and an expected body sideslip angle corresponding to the expected vehicle state information

S102

determining that the expected vehicle state information is a drifting state, and obtaining an expected rear axle sideslip angle of the vehicle by calculating an inverse tangent of the expected body sideslip angle and vehicle state information

S201

obtaining a maximum operating angle and an actual angle of a current state of a rear wheel steering system

S202

determining a reserve steering angle capacity of the rear wheel steering system according to the maximum operating angle and the actual angle

S203

when the reserve steering angle capacity does not reach a first predefined value and the actual angle does not reach the expected rear axle sideslip angle, increasing a rear wheel steering angle via the rear wheel steering system, and returning to the step of obtaining the maximum operating angle and the actual angle of the current state of the rear wheel steering system

S204

when the reserve steering angle capacity reaches the first predefined value but the actual angle does not reach the expected rear axle sideslip angle, controlling a rear axle driving system to apply torque to a rear axle to cause a rear wheel sideslip angle to reach a first target value, where the first target value is a difference between the expected rear axle sideslip angle and an actual angle of a current state of a rear wheel

FIG. 2

300

301          302          303

| obtaining module | → | calculating module | → | control module |

FIG. 3

401          402          403

| Processor | | Memory | | Communication interface |

Bus          404

FIG. 4

## INTERNATIONAL SEARCH REPORT

| International application No. |
| --- |
| **PCT/CN2024/095853** |

**A.    CLASSIFICATION OF SUBJECT MATTER**

B60W 30/18(2012.01)i;  B62 D6/00(2006.01)i

According to International Patent Classification (IPC) or to both national classification and IPC

**B.    FIELDS SEARCHED**

Minimum documentation searched (classification system followed by classification symbols)

IPC:B60W B62D

Documentation searched other than minimum documentation to the extent that such documents are included in the fields searched

Electronic data base consulted during the international search (name of data base and, where practicable, search terms used)

CNABS, DWPI, CNTXT, ENTXT, CNKI: 漂移, 控制, 侧偏角, 侧滑角, 后轮, 后轴, 转角, drift control, sideslip angle, rear wheel, rear axle, rotation angle

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111267856 A (NANJING UNIVERSITY OF SCIENCE AND TECHNOLOGY) 12 June 2020 (2020-06-12) description, paragraphs 43-117, and figures 1-8 | 1, 4, 7-12 |
| A | CN 115534966 A (XIAOMI AUTOMOBILE TECHNOLOGY CO., LTD.) 30 December 2022 (2022-12-30) entire document | 1-12 |
| A | CN 115675634 A (GREAT WALL MOTOR CO., LTD.) 03 February 2023 (2023-02-03) entire document | 1-12 |
| A | CN 115675636 A (GREAT WALL MOTOR CO., LTD.) 03 February 2023 (2023-02-03) entire document | 1-12 |
| A | US 2021122415 A1 (CONTINENTAL AUTOMOTIVE SYSTEMS INC.) 29 April 2021 (2021-04-29) entire document | 1-12 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 July 2024** | **03 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095853**

| Patent document cited in search report | | | Publication date (day/month/year) | Patent family member(s) | Publication date (day/month/year) |
|---|---|---|---|---|---|
| CN | 111267856 | A | 12 June 2020 | None | |
| CN | 115534966 | A | 30 December 2022 | None | |
| CN | 115675634 | A | 03 February 2023 | None | |
| CN | 115675636 | A | 03 February 2023 | None | |
| US | 2021122415 | A1 | 29 April 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310635955